# EUROPÄISCHE PATENTSCHRIFT

(11) **EP 0 347 415 B1**
(45) Veröffentlichungstag und Bekanntmachung des Hinweises auf die Patenterteilung: **02.11.1994**
(21) Anmeldenummer: 88901562.4
(22) Anmeldetag: 18.02.1988
(51) Int. Cl.: B25J 3/04

(54) **GERÄT ZUM AUSTAUSCHEN VON BEWEGUNGEN BZW. POSITIONEN**
APPLIANCE FOR EXCHANGING MOVEMENTS OR POSITIONS
APPAREIL PERMETTANT D'ECHANGER DES MOUVEMENTS OU DES POSITIONS

(30) Priorität: 19.02.1987 DE 3705262
(43) Veröffentlichungstag der Anmeldung: 27.12.1989
(73) Patentinhaber: DIKEOULIAS, Vassilios, D-66123 Saarbrücken (DE)
(72) Erfinder: DIKEOULIAS, Vassilios, D-66123 Saarbrücken (DE)
(86) Internationale Anmeldenummer: DE8800082
(87) Internationale Veröffentlichungsnummer: WO8806077

(56) Entgegenhaltungen:
- DE-A- 2 221 767

## Beschreibung

Die Erfindung betrifft ein Gerät zum Austauschen von Bewegungen bzw. Positionen.

Die bisherigen Geräte zum gegenseitigen Austausch von Regungen zweier Menschen auch zwischen entfernte Orte sind Telefongeräte. Zusammengeschaltet ermöglichen sie die Übertragung von Schallschwingungen zwischen zwei Menschen in beide Richtungen.

Die Übertragung von Bewegungen bzw. Positionen eines Menschen zu einem anderen Menschen leisten sie jedoch nicht.

Bewegungen können zwar mit Hilfe von Positionierantrieben, Manipulatoren, Lageregelkreise und Servoantriebe übertragen werden. Einschlägige Literatur hierzu sind:
- Köhler, G.W.: Typenbuch der Manipulatoren. Verlag Karl Thiemig, München, 1981.
- Warnecke, H.J.: Industrieroboter Katalog. Vereinigte Fachverlage Krausskopf, Mainz, 1983.

Nirgends wird jedoch ein Gerät beschrieben, das mit einem gleichartigen zusammengeschaltet eine Übertragung von Bewegung bzw. Position in beide Richtungen ermöglicht.

Eine Geräteanordnung zur Übertragung von Bewegung ist auch aus der Druckschrift DE-A-22 21 767 bekannt.

Hierbei soll jedoch die Geräteanordnung dazu dienen, die Nachahmung der Bewegung eines Menschen durch einen anderen Menschen zu erleichtern. Die Bewegung des einen Menschen wird nicht durch einen Positionierantrieb wiedergegeben, sondern aufgrund von Reizung durch Stimulatoren von dem anderen Menschen nachgeahmt.

Aufgabe der vorliegenden Erfindung ist es ein Gerät anzugeben, welches den Austausch von Bewegungen bzw. Positionen zwischen Menschen, die jeweils ein derartiges Gerät benutzen, zum Zwecke der gegenseitigen Betastung, Berührung, Massage und Ähnliches ermöglicht.

Diese Aufgabe wird mit einem gerät gemäß Anspruch 1 gelöst.

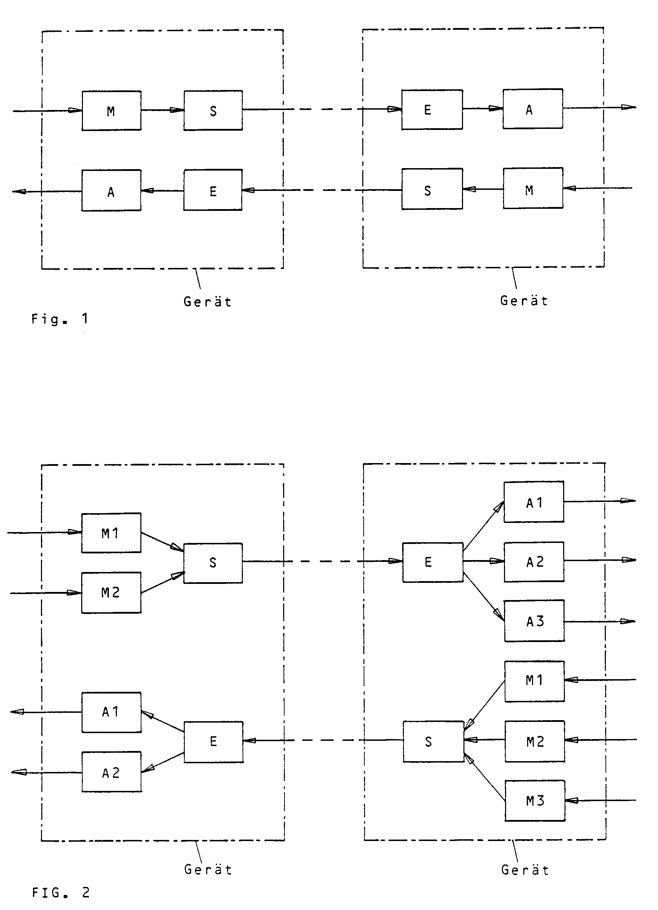

Hierzu muß das Gerät aus mindestens einem Meßgerät zur Aufnahme der Bewegung bzw. Position des Menschen und mindestens einem Positionierantrieb zur Wiedergabe der Bewegung bzw. Positionen eines anderen Menschen bestehen und die Möglichkeit besitzen mit einem gleichen zusammengeschaltet werden zu können, so daß im einfachsten Fall (Fig.1) der Positionierantrieb A (Fig.1) des einen Gerätes vom Meßgerät M (Fig.1) des anderen Gerätes angesteuert wird und umgekehrt. Zur Ermöglichung der Zusammen schaltung gehören zu dem Gerät außerdem noch eine Sendeeinheit S (Fig.1) zum Aussenden der Führungsgröße des Positionierantriebes zu dem anderen Gerät und eine Empfangseinheit E (Fig. 1) zum Empfangen der Führungsgröße vom anderen Gerät. Fig. 1 zeigt die Zusammenschaltung zwei er solcher Geräte.

Durch eine Ausstattung des Gerätes mit mehreren Positionierantrieben und Meßgeräten läßt sich die Übertragung mehrerer voneinander unabhängigen Bewegungen realisieren.

Dabei lassen sich Geräte mit unterschiedlich viele Sende- und Empfangsmöglichkeiten zusammenschalten. Fig. 2 stellt dies dar. In dem einen Gerät sind zwei Positionsmeßgeräte M1 und M2 (Fig.2) und zwei Positionierantriebe A1 und A2 (Fig.2) vorhanden. Im anderen Gerät sind drei Meßgeräte M1, M2, M3 (Fig.2) und drei Positionierantriebe A1, A2, A3 (Fig.2) vorhanden. Falls nur ein Sende- und nur ein Empfangskanal zur Verfügung steht wie in Fig. 2 dargestellt müssen die Sende- und Empfangseinheiten auch eine Multiplexerfunktionsweise beinhalten. In Fig. 2 würde dann jeweils A1 mit M1 und A2 mit M2 verbunden sein. M3 und A3 des einen Gerätes blieben ungenutzt.

Die Übertragung der Signale zwischen den Geräten kann auf verschiedene Weise geschehen. Insbesondere unter Verwendung der bekannten nachrichtentechnischen Einrichtungen. Eine besonders einfache Möglichkeit ist die Verwendung von Akustikkopplern an Telefongeräten.

Die einzelnen Positionierantriebe können jeweils mit einem mechanischen Getriebe ausgerüstet sein, das nach Bedarf ausgeführt und einstellbar sein darf.

Auch die mit dem Positionierantrieb bewegten Objekte dürfen je nach Bedarf unterschiedlich ausgeführt sein, insbesondere jedoch die Form von Fingern, Händen, Geschlechtsteilen oder anderen Körperteilen besitzen.

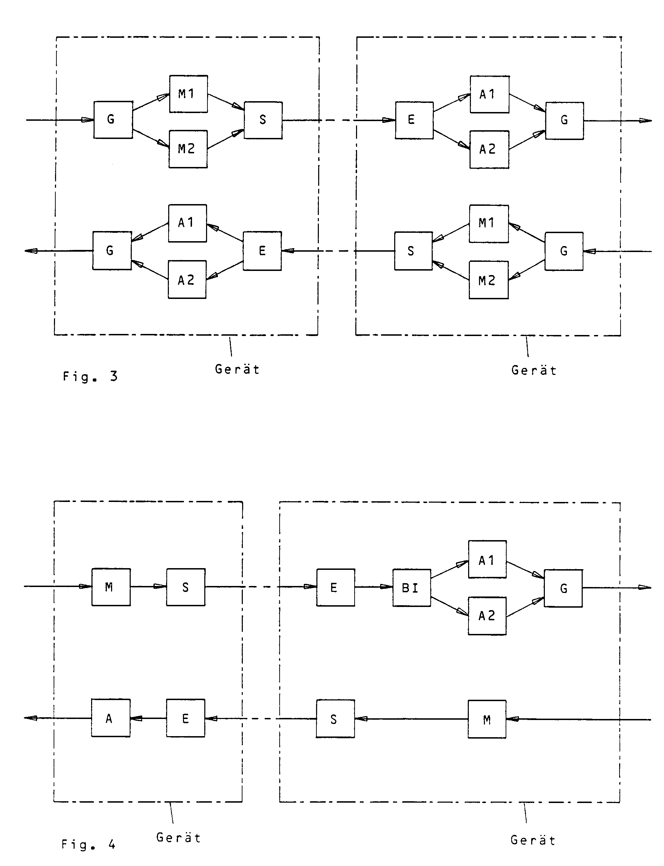

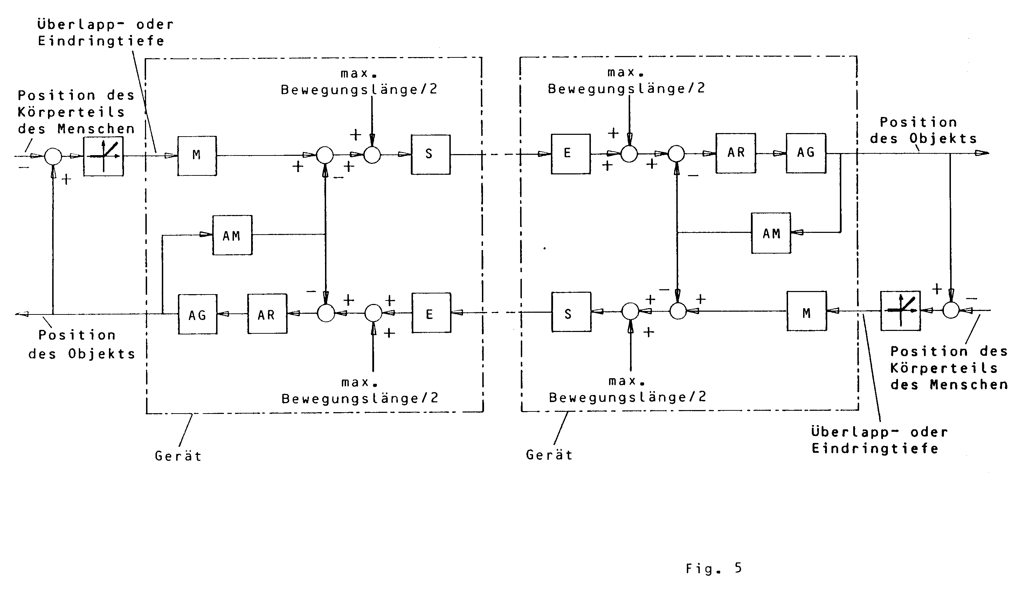

Die Bahn- und Ausrichtungsbewegung eines Objekts kann auch durch mehrere durch ein Getriebe G gekoppelte Positionierantriebe bestimmt sein, die jeweils mit einem oder mehrerer, ihrerseits durch ein Getriebe G gekoppelter Meßgeräte des anderen Gerätes verbunden sind (Fig.3) oder aber die in ihrer gemeinsamen Bewegung vorprogrammiert sind und als Ganzes von einem Meßgerät im anderen Gerät abhängen (Fig.4, rechtes Gerät). Im letzten Fall muß in dem Gerät der Empfangseinheit E eine Bahninterpolationseinheit BI nachgeschaltet werden.

Durch Messung der Krafteinwirkung am Objekt bzw. am einzelnen Positionierantrieb und deren Rückführung zum anderen Gerät ist die Realisierung einer Kraftrückführung, wie sie bei Telemanipulatoren ausgeführt wird, möglich.

Der Vorteil des Gerätes liegt in der Möglichkeit, die den Menschen gegeben wird sich auch aus größerer Entfernung gegenseitig zu berühren, zu betasten, zu massieren und insbesondere Geschlechtsverkehr auszuüben.

Diese Möglichkeit kann gerade für ortlich getrennte (Ehe-) paare von besonderer Bedeutung sein, insbesondere z.B. bei Trennung aufgrund von Krankheit, Seereise, Wehrdienst, Auslandsaufenthalt. Die Bedeutung des Gerätes zur Erhaltung einer Partnerschaft bei längerer Trennung kann wesentlich sein.

Auch die Verwendung zum Ausgleich einer körperlichen Behinderung ist möglich.

Im folgenden wird ein Ausführungsbeispiel beschrieben für Geräte mit nur einer Bewegungsachse und ohne Kraftrückführung und für den speziellen Fall, daß die Messung der Position des einen Menschen bzw. eines seiner Körperteile relativ zu dem vom anderen Menschen bewegten Objekt geschieht.

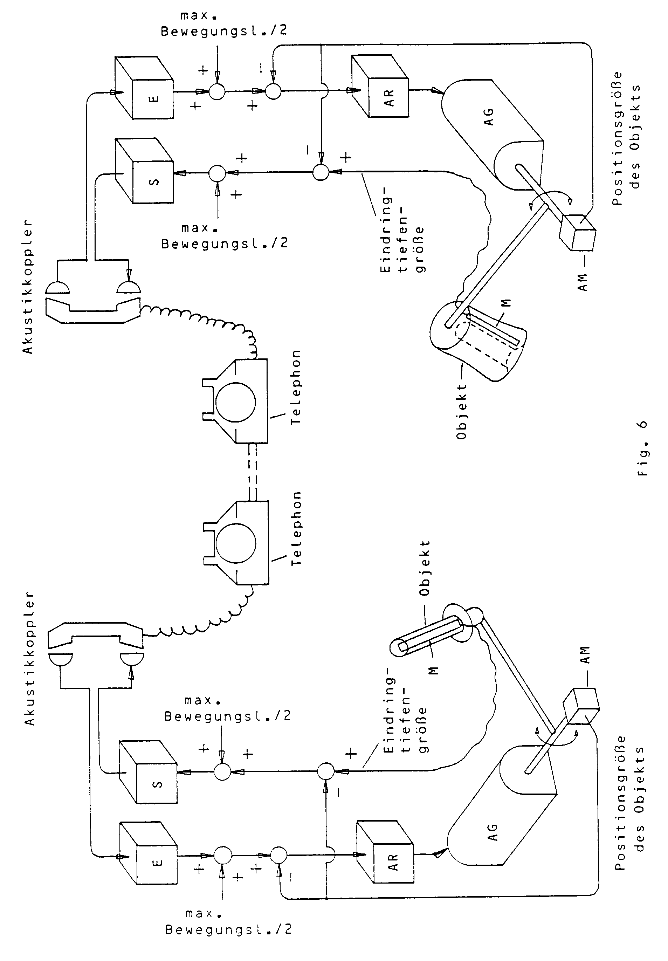

In Fig. 5 wird das Strukturbild von zwei zusammengeschalteten Geräten dieser Art dargestellt. Eine anschauliche Darstellung für die Verwendung solcher Geräte zum Geschlechtsverkehr zeigt Fig. 6.

Die Geräte beinhalten je eine Sende- und Empfangseinheit, außerdem einen Positionierantrieb, der als Lageregelkreis ausgeführt ist und aus den Komponenten Regler AR, Gleichstromgetriebemotor AG und Meßglied AM besteht. Das Meßglied AM führt die Ist-Positionsgröße zurück damit diese in der Subtraktionsstelle mit der vom anderen Gerät gesteuerten Soll-Positionsgröße verglichen wird.

Zur Messung der Position des einen Menschen bzw. eines seiner Körperteile dient das Meßgerät M. Da es am vom anderen Menschen bewegten Objekt angebracht ist mißt es lediglich die Relativposition zu diesem Objekt, also die Überlapp- oder Eindringtiefe vom Körperteil des Menschen am, im oder über dem Objekt.

Mißt man die Position des Objekts und die Position des Körperteils des Menschen in gleicher Richtung, so ergibt sich die Überlapp- oder Eindringtiefe als physikalische Subtraktion der Position des vorderen Endes des Körperteils des Menschen von der Position des vorderen Endes des diesem entgegenrichteten Objekts, wobei bei negativem Ergebnis die Überlapp- oder Eindringtiefe gleich Null zu setzen ist. Dieser Sachverhalt wird im Strukturbild Fig. 5 als außerhalb des Gerätes gelegene Subtraktionsstelle mit nachgeschaltetem Kennlinienglied dargestellt.

Die Subtraktionsstelle wird innerhalb des Gerätes durch eine weitere Subtraktionsstelle, bei der die Positionsgröße des Objekts von der Überlapp- oder Eindringtiefengröße subtrahiert wird, kompensiert (Entkoppelung). Das dabei erzeugte Signal entspricht der Position des Körperteils des Menschen, ist jedoch invertiert (negativ).

Durch diese Inversion und den bei den nachgeschalteten Additionsstellen, die erste im gleichen Gerät vor der Sendeeinheit S und die zweite im anderen Gerät nach der Empfangseinheit E, wird das gegenläufige Verhalten zwischen dem Körperteil des Menschen am einen und dem Objekt am anderen Gerät ermöglicht. Die Aufteilung in zwei nacheinander angeordnete Additionsstellen wird gewählt damit sich beim Empfang eines Signals mit der Größe gleich Null eine Mittelstellung des Objekts ergibt. Die hinzu addierten Größen entsprechen daher jeweils der Hälfte der maximalen Bewegungslänge der Positionierantriebe.

Die für den Betrieb zweckmäßige, dem Lagerregelkreis unterlagerte Geschwidigkeits- und Stromregelung wurde hier nicht beschrieben, da sie für Lagerregelkreise zum Stand der Technik gehört. Das Gleiche gilt für die Drehmoment- und auch Bewegungsraumbegrenzung.

Der in Fig. 6 gezeigte Hebel ist der Länge der Oberschenkel des Menschen angepaßt.

Die Übertragung der Signale zwischen den Geräten geschieht hier über Akustikkoppler und dem Telefonnetz.

## Patentansprüche

1. Gerät mit einem Meßgerät(M) zur Erfassung der Bewegung und/oder Position mindestens eines menschlichen Körperteils, mit mindestens einem einem menschlichen Körperteil nachgebildeten Objekt und mit einem Positionierantrieb(A) zur Erzeugung einer Bewegung dieses Objektes, welches Gerät über eine nachrichtentechnische Einrichtung zusammenschaltbar ist mit einem gleichartigen Gerät, wobei im zusammengeschalteten Zustand die Bewegung und/oder Position des Objektes des einen Gerätes anhand eines von dem Meßgerät(M) des anderen Gerätes erzeugten Signals steuerbar ist und umgekehrt.

2. Gerät nach Anspruch 1, dadurch gekennzeichnet, daß es mit mehreren Positionierantrieben(A1,A2,...) und Meßgeräten (M1,M2,...) ausgestattet ist.

3. Gerät nach einem der Ansprüche 1 oder 2, dadurch gekennzeichnet, daß vorhandene Sende- und Empfangseinheiten(S und E) eine Multiplexerfunktionsweise beinhalten.

4. Gerät nach einem der Ansprüche 1 bis 3, dadurch gekennzeichnet, daß es mit einem Akustikkoppler an Telefongeräte anschließbar ist.

5. Gerät nach einem der Ansprüche 1 bis 4, dadurch gekennzeichnet, daß wenigstens einer der Positionierantriebe(A) mit einem einstellbaren mechanischen Getriebe ausgerüstet ist.

6. Gerät nach einem der Ansprüche 1 bis 5, dadurch gekennzeichnet, daß es auf eine Kraftrückführung von einem Gerät zum anderen Gerät ausgelegt ist.

7. Gerät nach einem der Ansprüche 1 bis 6, dadurch gekennzeichnet, daß am Objekt ein Meßgerät(M) zur Messung der Überlapp- oder Eindringtiefe des Körperteils am, im oder über dem Objekt angebracht ist, wobei die Position des Körperteils anhand der Überlapp- oder Eindringtiefengröße und der Positionsgröße des Objektes durch Entkoppelung bestimmt wird.

## Claims

1. Device with a measuring instrument (M) for recording the movement and/or position of at least one human part of the body, with at least one object imitated on the model of a human part of the body and one positioning drive (A) for generating a movement of this object; this device can be connected with a similar device via a communications engineering installation, with the movement and/or position of the object of one device being controllable, when connected, by means of a signal generated by the measuring instrument (M) of the other device, and vice versa.

2. Device in accordance with claim 1 characterized by the fact that it is equipped with several positioning drives (A1, A2, ...) and measuring instruments (M1, M2, ...).

3. Device in accordance with one of the claims 1 or 2 characterized by the fact that available sending and receiving units (S and E) include a multiplexer function.

4. Device in accordance with one of the claims 1 to 3 characterized by the fact that it can be connected to telephones by means of an acoustic coupler.

5. Device in accordance with one of the claims 1 to 4 characterized by the fact that at least one of the positioning drives (A) is equipped with an adjustable mechanical gear.

6. Device in accordance with one of the claims 1 to 5 characterized by the fact that it has been designed for a power feedback from one device to the other device.

7. Device in accordance with one of the claims 1 to 6 characterized by the fact that a measuring instrument (M) is attached to the object for measuring the overlapping or penetration depth of the part of the body at, in or over the object, with the position of the part of the body being determined by the size of the overlapping or penetration depth and the position size of the object through decoupling.

## Revendications

1. Appareil avec appareil de mesure (M) pour la saisie du mouvement et/ou de la position au moins d'une partie du corps humain, avec au moins un objet reproduisant une partie du corps humain et avec une commande de positionnement (A) pour la génération d'un mouvement de cet objet, l'appareil peut être connecté à un appareil similaire par le biais d'un dispositif technique de communications, le mouvement et/ou la position de l'objet de l'un des appareils pouvant, lorsque l'appareil est connecté, être contrôlée à l'aide d'un signal généré par l'appareil de mesure (M) de l'autre appareil, et inversement.

2. Appareil d'après la revendication 1, caractérisé par le fait qu'il est équipé de plusieurs commandes de positionnement (A1, A2, ...) et appareils de mesure (M1, M2, ...).

3. Appareil d'après la revendication 1 ou 2, caractérisé par le fait que des unités d'émission et de réception (S et E) existantes contiennent une fonction multiplexeur.

4. Appareil d'après l'une des revendications 1 à 3, caractérisé par le fait qu'il peut être connecté à des installations téléphoniques par le biais d'un coupleur acoustique.

5. Appareil d'après l'une des revendications 1 à 4, caractérisé par le fait qu'au moins l'une des commandes de positionnement (A) est équipée d'un mécanisme réglable.

6. Appareil d'après l'une des revendications 1 à 5, caractérisé par le fait qu'il est construit sur un retour de force d'un appareil à l'autre.

7. Appareil d'après l'une des revendications 1 à 6, caractérisé par le fait que l'appareil de mesure (M) est installé à l'objet pour mesurer de la profondeur de recouvrement ou de pénétration de la partie du corps sur, dans ou au-dessus de l'objet étant déterminée par découplage à partir de la valeur de la profondeur de recouvrement ou de pénétration et de la valeur de la position de l'objet.
